# EUROPEAN PATENT APPLICATION

(11) **EP 2 296 256 A2**
(43) Date of publication of application: **16.03.2011**
(21) Application number: 10251555.8
(22) Date of filing: 04.09.2010
(51) Int. Cl.: H02K 3/52

(54) **Rotor assembly**

(30) Priority: 10.09.2009 GB 0915872
(71) Applicant: Goodrich Control Systems Ltd, Solihull B90 4LA (GB)
(72) Inventor: Spitz, Daniel Jonathan, Finchley, London N3 3NE (GB); Hill, Peter Martin, Luton, Bedfordshire LU3 3RA (GB)
(74) Representative: Bailey, Richard Alan

(57) **Abstract**

A rotor assembly comprises a rotor body (10) defining a pole (12), a winding (14) encircling the pole (12), a compression member (22) located radially inwards of the winding (14), and compression means located between the compression member (22) and the rotor body (10) and operable to urge the compression member (22) in an outward direction to apply a compressive load to the winding (14). A method of assembly of the rotor is also disclosed.

## Description

This invention relates to a rotor assembly, and in particular to a rotor assembly suitable for use in high speed applications, for example as the rotor of an electrical generator for use in conjunction with an aircraft gas turbine engine.

The rotor of an electrical generator used in conjunction with an aircraft gas turbine engine is typically driven for rotation at speeds of up to approximately 20000 rpm. At such high speeds it will be appreciated that the rotor windings carried by the rotor will experience very high centrifugal forces and other vibrational loadings. As a result it is desirable to apply loadings to the windings during the assembly of the rotor assembly to ensure that the windings are properly seated so that, during subsequent use, movement of the windings relative to the remainder of the rotor does not occur.

EP 1494335 describes a known technique whereby the windings of a rotor assembly are compressed. The technique involves using a spacer and locking wedge assembly to apply loadings to the windings in an approximately circumferential direction, compressing the windings against the pole faces of the rotor. Whilst assisting in ensuring that the windings are properly seated in the circumferential direction, only limited compression in the radial direction, i.e. the direction in which the centrifugal forces act, occurs. Consequently, during subsequent use, there is still a risk of the windings becoming unseated in the radial direction which is undesirable.

An object of the invention is to provide a rotor assembly and method of assembly thereof in which this disadvantage is overcome or is of reduced effect.

According to one aspect of the invention there is provided a rotor assembly comprising a rotor body defining a pole, a winding encircling the pole, a compression member located radially inwards of the winding, and compression means located between the compression member and the rotor body and operable to urge the compression member in an outward direction to apply a compressive load to the winding.

The compressive load preferably acts in a direction substantially parallel to a pole face of the pole. As this direction is similar to the direction in which centrifugal forces act, in use, it will be appreciated that the winding can be pre-loaded, during assembly to simulate the centrifugal loadings that will be experienced in use, thereby ensuring that the windings are properly seated and reducing the risk of undesired movement, in use.

The compression means conveniently comprises a pair of taper wedges, relative movement of which changes the position of the compression member relative to the rotor body.

The rotor assembly preferably further comprises a closure member arranged to close a rotor slot through which the winding extends, the closure member preferably being of aluminium metal matrix material form. Conveniently, the closure member is of an aluminium silicon carbide mix containing up to 40% silicon carbide.

The invention further relates to a method of assembly of a rotor, the method comprising steps of:
(a) positioning a compression member adjacent a pole of a rotor body;
(b) encircling at least part of the pole with a winding; and
(c) urging the compression member in an outward direction to apply a compressive load to the winding.

The step of urging the compression member is conveniently achieved by adjusting the relative positions of a pair of taper wedges. However, other forms of compression means could be used to provide this functionality if desired.

Additional means, for example similar to the arrangement of EP 1494335 may be provided to compress the windings against the pole face.

The invention will further be described, by way of example, with reference to the accompanying drawings, in which:
Figures 1 and 2 are side and end views illustrating a rotor of an electrical generator;
Figure 3 is an enlarged end view illustrating a rotor assembly in accordance with one embodiment of the invention;
Figure 4 is a sectional view of the rotor body of the rotor assembly; and
Figure 5 is a diagrammatic view of part of the rotor assembly of Figure 3.

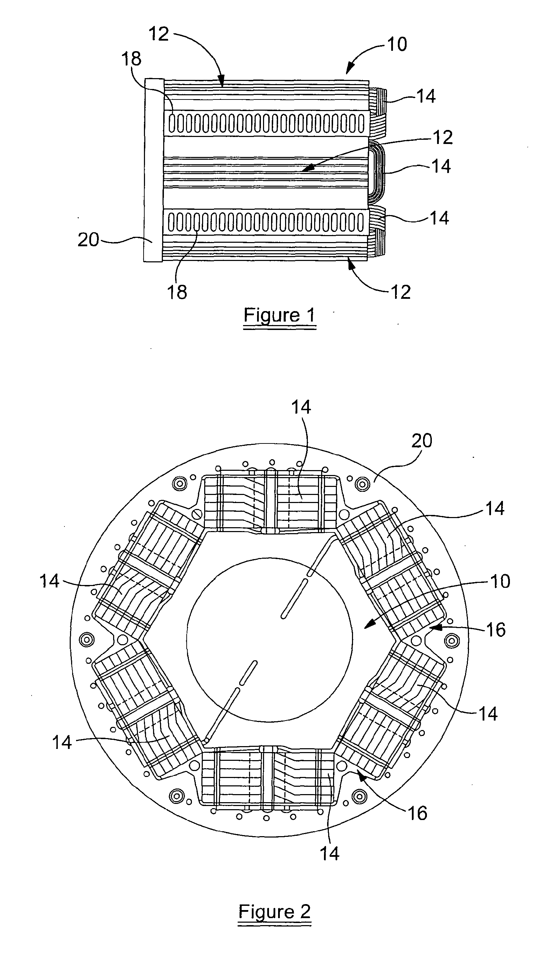

Referring firstly to Figures 1 and 2 there is illustrated a rotor assembly for an electrical generator. The rotor assembly comprises an elongate rotor body 10 defining poles 12 around which respective windings 14 are located, the windings extending along generally V shaped rotor slots 16 defined between adjacent ones of the poles 12. As best shown in Figure 1, each rotor slot 16 is closed at its outer periphery by an elongate closure member 18. An end band 20 is secured to the rotor body 10 and serves to secure each closure member 18 in position. Although Figure 1 only illustrates the location of an end band 20 at one end of the rotor assembly, in practice a similar band will be secured at the opposite end thereof as well.

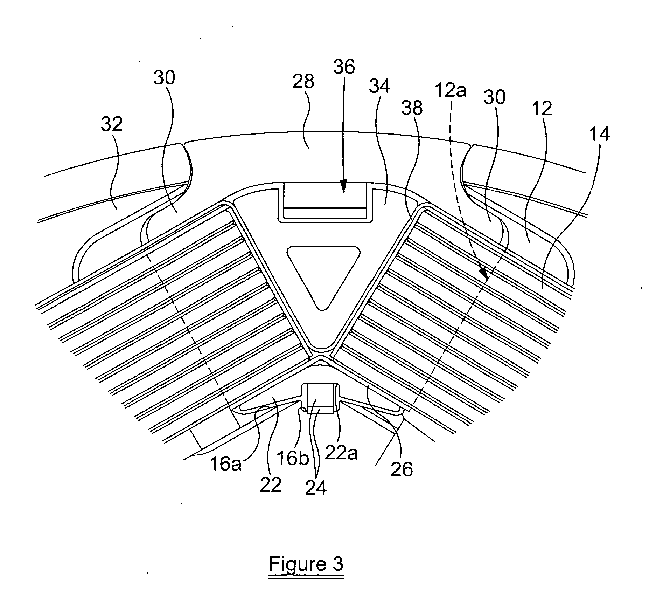

Turning to Figures 3 to 5 a rotor assembly in accordance with one embodiment of the invention is illustrated. The arrangement of Figures 3 to 5 is very similar to that of Figures 1 and 2 and like reference numerals will be used to denote like parts.

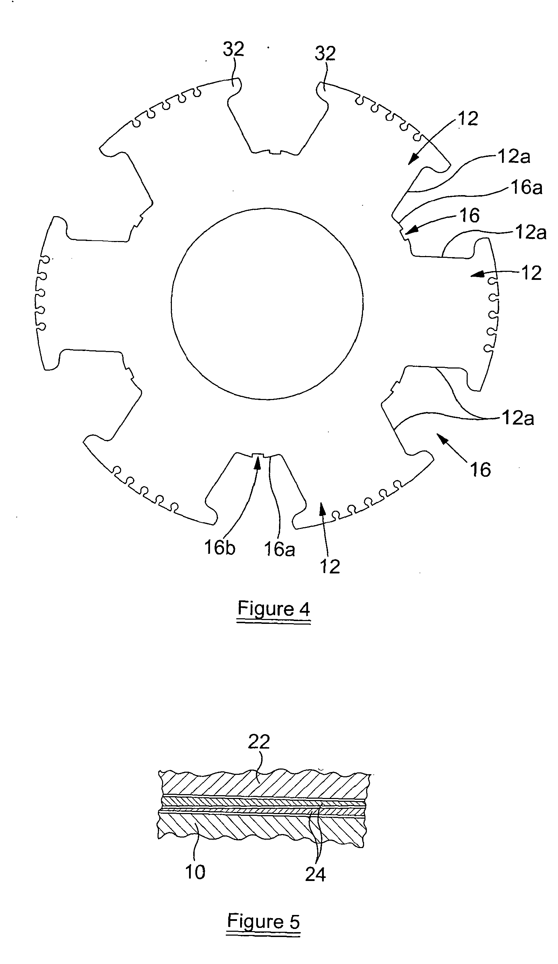

The rotor assembly illustrated in Figures 3 to 5 comprises a rotor body 10 of elongate form, the rotor body defining a series of axially extending rotor poles 12. Between adjacent ones of the rotor poles 12 are defined a series of elongate rotor slots 16. As best shown in Figure 4, each rotor pole 12 defines a pair of pole faces 12a which face toward respective ones of the slots 16. A winding 14 encircles each pole 12, the winding including regions lying adjacent each pole face 12a associated with the pole, thus each slot 16 includes parts of two adjacent ones of the windings 14.

Adjacent the base 16a of each slot 16 is located a compression member 22 of shallow wedge shaped form. The compression member 22 is supported upon and held in spaced relationship to the base 16a of the slot 16 by compression means in the form of a pair of lock wedges 24. Recesses 16b, 22a are provided in the base 16a of the slot 16 and in the compression member 22 to accommodate the lock wedges 24. The lock wedges 24 are of oppositely orientated, shallow tapering form, as shown in Figure 5, with the result that relative longitudinal movement therebetween can be used to adjust the spacing of the compression member 22 from the base 16a of the slot 16.

The compression member 22 bears against the radially inner part of the associated windings 14, bearing against parts of both of the windings 14 associated with the slot 16, an electrically insulating pad 26 being located therebetween in order to ensure that there is no conduction of electricity between adjacent ones of the windings 14. It will thus be appreciated that by appropriate adjustment of the positions of the lock wedges 24, the compression member 22 can be urged in an outward direction, thereby applying a compressive load to the windings 14 associated therewith urging the windings 14 in an outward direction, simulating the effects of centrifugal force upon the windings 14 and forcing the windings 14 to become properly seated in this direction.

The rotor assembly further comprises an outer closure member 28 which spans the slot 16 and includes fingers 30 received beneath integral lips 32 provided at the tips of the poles 12, thereby resisting outward movement of the closure member 28 in use. The radially outer parts of the windings 14 bear against the fingers 30, thus the compression of the windings 14 serves to clamp the windings 14 and fingers against the lips 32 at the tips of the poles 12.

Inward of the closure member 28 is located a compression wedge 34 which is located in the slot 16 between the windings 14 associated with adjacent ones of the poles 12. A second lock wedge arrangement 36 is located between the closure member 28 and the wedge 34 and is operable to urge the wedge 34 in an inward direction. Such movement of the wedge 34 serves to compress the windings 14 against the pole faces 12a and so further assists in ensuring that the windings 14 are properly seated. An electrically insulating sleeve 38 extends over the wedge member 34 to assist in ensuring that the wedge member 34 is electrically insulated from the windings 14 thereby ensuring that the conduction of electricity between adjacent ones of the windings 14 is resisted The sleeve 38 further ensures that the closure member 28 is electrically insulated from the windings 14.

Assembly of the rotor involves positioning the compression members 22 at the bases of respective ones of the slots 16. Once the compression members 22 have been so positioned, the windings 14 are wound around the poles 12. The closure members 28 are then slid into position from one end of the rotor, and the wedge members 34 and associated locking wedge arrangements 36 are loosely fitted into position. Once so assembled, the lock wedges 24 are inserted, one wedge 24 associated with each compression member 22 being inserted from each end of the rotor assembly. The co-operation between the wedges 24 applies a force to the compression member 22 urging the compression member 22 in an outward direction and, as described hereinbefore, such movement of the wedge member 22 serves to urge the windings 14 in an outward direction compressing the windings 14 against the inner surfaces of the fingers 30 of the closure members 28. The loading applied by the compression members 24 is such as to simulate the application of the centrifugal forces that occurs in use of the rotor assembly. Indeed the forces applied at this stage may well be higher than those typically experienced.

After compression of the windings 14 in this direction, the locking wedge arrangements 36 may similarly be manipulated to urge the wedge members 34 in an inward direction resulting in compression of the windings 14 against the pole faces 12a.

Conveniently, an impregnation step in which the rotor assembly is impregnated with lacquer is conducted, the lacquer serving to secure the various components of the rotor assembly against movement. The impregnation step may be undertaken prior to testing of the rotor assembly by subjecting it to overspeed rotation, or alternatively it may be undertaken after such testing has been completed. If the impregnation step is undertaken after testing, then if the compression members 22 and lock wedges 24 are no longer loaded after the overspeed testing, it is possible that they could be removed prior to lacquering and so no longer present in the final product. However, it is not envisaged that the compression members 22 will generally be removed in this manner.

The compression and wedge members 22, 34 will typically be of aluminium form in order to be of relatively low weight whilst of sufficient strength to perform the required functions. It is thought that most plastics materials will be insufficiently strong to perform in the required manner unless manufactured of increased dimensions. The lock wedges 24 and wedge arrangements 36 will preferably be of carbon fibre form for strength and dimensional accuracy whilst being of low weight. The closure member 28 could be machined from a titanium material in order to be of the desired strength whilst of low weight. However, it is currently envisaged that this component will be manufactured by extruding an aluminium metal matrix composite material, preferably an aluminium silicon carbide mix containing up to 40% silicon carbide. Such a material is of low weight and of excellent strength and stiffness far exceeding that of titanium materials. Further, it is of relatively low cost. However, machining of the material is difficult and so extrusion of the material is the most likely manufacturing method, machining using diamond cutters being used to cut the extruded material to appropriate lengths. Alternatively, carbon fibre could be used but this would involve the use of a more difficult production process, has the disadvantage of a more limited upper end to the working temperature range, and would incur higher costs.

In the description hereinbefore both the compression member 22 and the wedge member 34 are urged by associated lock wedges 24 or wedge arrangements 36 to provide compression of the windings 14. It will be appreciated, however, that other forms of compression means may be provided to achieve such urging of the compression member 22 and/or wedge member 34 to achieve the desired compression of the windings 14.

Although specific materials are mentioned hereinbefore, it will be appreciated that the invention is not restricted in this regard and that a number of modifications and alterations may be made both to the materials used and to other features of the assembly without departing from the scope of the invention.

## Claims

1. A rotor assembly comprising a rotor body (10) defining a pole (12), a winding (14) encircling the pole (12), a compression member (22) located radially inwards of the winding (14), and compression means located between the compression member (22) and the rotor body (10) and operable to urge the compression member (22) in an outward direction to apply a compressive load to the winding (14).

2. An assembly according to Claim 1, wherein the compressive load applied by the compression member (22) to the winding (14) acts in a direction substantially parallel to a pole face (12a) of the pole (12).

3. An assembly according to Claim 1 or Claim 2, wherein the compression means comprises a pair of taper wedges (24), relative movement of which changes the position of the compression member (22) relative to the rotor body (10).

4. An assembly according to any of the preceding claims, further comprising a closure member (28) arranged to close a rotor slot (16) through which the winding (14) extends.

5. An assembly according to Claim 4, wherein the closure member (28) is of an aluminium metal matrix material.

6. An assembly according to Claim 5, wherein the aluminium metal matrix material comprises an aluminium silicon carbide mix containing up to 40% silicon carbide.

7. An assembly according to any of Claims 4 to 6, further comprising a compression wedge (34) located radially inward of the closure member (28) and urged in an inward direction to apply a compressive load to the winding (14), compressing the winding (14) against the respective pole face (12a).

8. A method of assembly of a rotor, the method comprising steps of:
(a) positioning a compression member (22) adjacent a pole (12) of a rotor body (10);
(b) encircling at least part of the pole (12) with a winding (14); and
(c) urging the compression member (22) in an outward direction to apply a compressive load to the winding (14).

9. A method according to Claim 8, wherein the step of urging the compression member (22) is achieved by adjusting the relative positions of a pair of taper wedges (24).

10. A method according to Claim 8 or Claim 9, further comprising a step of providing a closure member (28) to close a rotor slot (16) through which the winding (14) extends.

11. A method according to Claim 10, wherein the closure member (28) is of extruded form.

12. A method according to Claim 11, where the closure member (28) is of aluminium metal matrix material form.
